# EUROPÄISCHE PATENTSCHRIFT

(11) **EP 0 303 948 B1**
(45) Veröffentlichungstag und Bekanntmachung des Hinweises auf die Patenterteilung: **19.10.1994**
(21) Anmeldenummer: 88112958.9
(22) Anmeldetag: 10.08.1988
(51) Int. Cl.: D06N 7/00, C08L 25/02

(54) **Verformbares textiles Flächengebilde zur Verkleidung lärmbelasteter Räume und Verfahren zu seiner Herstellung**
Deformable textile products for lining noise-polluted spaces
Matière textile déformable pour revêtir des pièces exposées au bruit et procédé pour sa préparation

(30) Priorität: 21.08.1987 DE 3727932; 14.01.1988 DE 3800779
(43) Veröffentlichungstag der Anmeldung: 22.02.1989
(73) Patentinhaber: Dura Tufting GmbH, D-36043 Fulda (DE); Bayerische Motoren Werke Aktiengesellschaft, 80788 München (DE)
(72) Erfinder: Böhm, Robert Roman, Dr., D-6901 Wiesenbach (DE); Schneider, Erwin, D-6400 Fulda (DE); Russel, Peter, Dipl.-Chem., D-5090 Leverkusen (DE); Vogt, Hans-Günter, Dr., D-4047 Dormagen 1 (DE); Hahl, Dietrich, Dipl.-Ing., D-5067 Kürten (DE); Czep, Franz, D-81673 München (DE); Regendantz, Klaus, D-85757 Karlsfeld (DE)
(74) Vertreter: Fuchs Mehler Weiss

(56) Entgegenhaltungen:
- EP-A- 0 141 415
- DE-A- 1 948 527
- DE-A- 2 057 556
- DE-A- 2 557 719
- DE-A- 2 924 197
- GB-A- 1 220 549
- US-A- 4 186 230
- US-A- 4 199 634
- DATABASE WPI, Nr.80-77934, DERWENT Pub. Ltd. London & JP-A-55120636 (DENKI KAGAKU KOGYO)

## Beschreibung

Die Erfindung geht aus von einem verformbaren textilen Flächengebilde gemäß dem Oberbegriff des Patentanspruches 1.

Die bekannten textilen Flächengebilde für diesen Zweck bestehen aus einem Spinnvlies als Trägerbahn für die durch Einnadeln aufgebrachten Noppen als Sichtgewebe, auf das auf der Rückseite eine Polyäthylen-Schicht aufgesintert und weiterhin nach Aufbringen einer weiteren Vliesschicht eine Rückenbeschichtung aus Polyurethan-Schaum aufgebracht wird. Hierbei dient die aufgesinterte Polyäthylen-Schicht sowohl zur Einbindung der Noppen in die Trägerschicht als auch als Träger der Formstabilität nach der Verformung als auch als Sperrschicht gegen das Durchschlagen von Schaum der Rückenbeschichtung zur Sichtfläche, während die weitere mit Kreide und Schwerspat gefüllte Schicht zur Verbesserung der Schall- und Geräuschdämmung im Raum herangezogen wird.

Die US-A-4,199,634 offenbart ein textiles Flächengebilde mit einer Tuftingfläche als Sichtfläche, auf deren Rückseite eine Latexschicht aufgebracht ist sowie eine geräuschdämmende Schaumschicht. Die Latexschicht ist ein nicht gedämmtes steifes Styrol-Butadien Copolymer.

Aus der EP-A-0,141,415 und der DE-A-2,924,197 sind textile Flächenverkleidungen für lärmbelastete Räume bekannt mit einer Rückenbeschichtung und einer integrierten thermoplastischen Sperrschicht. Die Rückenbeschichtung besteht aus einem mit mineralischen Füllstoffen gefüllten nicht schaumförmigem thermoplastischem Kunststoffmaterial.

Die DE-A-2,057,556 beschreibt ein Verfahren zur Herstellung von Florteppichen mit doppelter Rückseite. Auf der Rückseite einer Sichtfläche aus getuftetem Flächengewebe ist lediglich eine einzige Latexschaumschicht und eine Folie vorgesehen.

Ein Kraftfahrzeugteppichzuschnitt gemäß der DE-A-2,557,719 zeichnet sich durch eine zwischen Teppich und Schaumkunststoff angeordnete als Schaumbremse wirkende Folie aus.

Auch nach der GB-A-1,220,549 wird auf Rückseite einer Sichtfläche aus getuftetem Flächengewebe nur eine Schaumschicht und eine Sperrschicht aufgebracht. Die US-A-4,186,230 schließlich zeigt eine getuftete Autoinnenverkleidung mit einem Rücken aus einer Mischung aus Polymerschäumen.

Die bekannten verformbaren Verkleidungen haben sich funktionell insoweit gut bewährt, als sie einfach herstellbar und insbesondere aufgrund ihrer Verformung in die der verkleideten Fläche entsprechende Kontur außerordentlich einfach montierbar sind. Ihr Nachteil ist ihre allgemein als ungenügend angesehene Dämmwirkung gegen Schall, die zur Erzielung einer ausreichenden Verringerung des Geräuschpegels im Raum die Anbringung gesonderter Dämmpackungen erforderlich macht. Es wird hierdurch nicht nur der Herstellungs- und Montageaufwand sondern darüber hinaus auch - im Kraftfahrzeugbau - in erheblichem Umfang das Leergewicht des Fahrzeuges erhöht.

Der vorliegenden Erfindung liegt als Aufgabe die Schaffung einer verformbaren Flächenkleidung mit verbesserten Schalldämpfungseigenschaften zugrunde, die - jedenfalls teilweise - die Einbringung von Schalldämmpackungen zur Erzielung einer zufriedenstellenden Schalldämmung entbehrlich macht. Diese Aufgabe wird durch ein Flächengebilde gelöst, bei dem die Sichtfläche aus Flächengewebe, Nadelfilz oder einer in Filz als Trägerschicht genadelten Tuftingfläche gebildet ist, auf deren Rückseite eine Schicht aus geschäumtem Latex, die Sperrschicht sowie die schalldämmende geschäumte Rückenbeschichtung aufgebracht sind, wobei die Sperrschicht zwischen geschäumter Latex-Schicht und Rückenbeschichtung angeordnet ist.

Durch die Erfindung ist ein verformbares Flächengebilde geschaffen, das ungeachtet einer ausreichenden Formstabilität nach der Verformung eine gegenüber den bekannten vorgeformten Flächenverkleidungen wesentlich geringere Steifheit besitzt, wobei weiterhin durch den Einsatz von Flizmaterial anstelle von Vliesmaterial als Basisgewebe für die Tuftingnoppen eine kontinuierliche Verringerung der Schalldurchlässigkeit von der Filzlage über die geschäumte und damit porige Latexschicht bis hin zu der sich hieran anschließenden dünnen Sperrschicht bzw. der massegefüllten Hinterschäumung erzielt wird. Hierbei kann die porige Latexschicht gegebenenfalls ebenfalls gefüllt sein. Grundlage der erforderlichen Formstabilität ist hierbei die Filzschicht in Verbindung mit der Latexhinterschäumung, die einerseits verformbar ist und ihre Form nach der Formgebung beibehält sowie andererseits in den Grenzbereich der Filzschicht eindringt und dort eine (dünne) "faserverstärkte Latexschicht" bzw. ein mittels Latex verfestigtes Vlies bildet, das dem Flächengebilde in seiner Gesamtheit eine ausreichende Zugfestigkeit verleiht. Hierbei stellt die gegenüber den bekannten verformten Flächenverkleidungen wesentlich veringerte Steifigkeit in Verbindung mit der sich von der Trägerschicht bis zur Rückenbe-schichtung kontinuierlich verringernden Schalldurchlässigkeit die Grundlage für die hervorragenden Schalldämneigenschaften der vorgeformten Flächenverkleidung dar, mit deren Hilfe die Schalldämm- und Schallschluckeigenschaften der Verkleidung erheblich - für die wesentlichen Frequenzen deutlich verringert werden können. In Abhängigkeit von den an die Geräuschdämpfung im verkleideten Raum gestellten Anforderungen kann bei Einsatz der erfindungsgemäßen Verkleidung der Einsatz zusätzlicher Schalldämmpackungen überhaupt entbehrlich werden.

Als Latexgrundlage für die Schaumschicht eignen sich insbesondere Copolymerisate oder deren Mischungen aus
A. 36 bis 90, vorzugsweise 45 bis 80, Gew.-Teilen
   a) C₈-C₁₄-Vinyl- und/oder Vinylidenaromat und/oder
   b) Methylmethacrylat, wobei bis zu 50, vorzugsweise bis zu 30, Gew.-% der Summe (a + b) durch
   c) Acrylnitril ersetzt sein können,
B. 10 bis 64, vorzugsweise 20 bis 55, Gew.-Teilen konjugiertes C4-C9-Dien und/oder Acrylsäure-C₂-C₈-alkylester,
C. 0 bis 8, vorzugsweise 0,5 bis 5, Gew.-Teilen β-ethylenisch ungesättigte C₃-C₅-Mono- und/oder C₄-C₆-Dicarbonsäure und
D. 0 bis 10 Gew.-Teilen anderer copolymerisierbarer Verbindungen,
wobei die Summe der Komponenten A. bis D. 100 Gew.-Teile beträgt.
Hierbei umfassen vorteilhaft
die Vinyl- bzw. Vinylidenaromaten a): Styrol, C₁-C₄-Alkylsubstituierte Styrole, wie 4-Methylstyrol und α-Methylstyrol, ferner Divinylbenzol und Vinylnaphtalin, insbesondere unsubstituiertes Styrol.
die konjugierten Diene B.: Butadien-1, 3, 2-Methylbutadien-1,3 (Isopren), 2,3-Dimethylbutadien-1,3, konjugierte Pentadiene oder Hexadiene; insbesondere Butadien-1,3.
die Acrylsäureester B.: Ethyl-, 2-Ethylhexyl-, insbesondere n-Butylacrylat.
die ungesättigten Mono- und Dicarbonsäuren C.: Acryl- und Methacrylsäure, Malein-, Fumar-, Citracon- und Itaconsäure, insbesondere Acryl- und Methacrylsäure.
die copolymerisierbaren Verbindungen D.: Acryl- und Methacrylsäureamid, Methacrylsäure-C₂-C₈-alkylester, beispielsweise Methacryläureethyl-, -butyl- und -hexylester, Methylacrylat sowie die C₁-C₁₂-Alkyl-halbester der Dicarbonsäuren C., beispielsweise Maleinsäure-n-dodecyl-halbester oder Fumarsäure-n-butylhalbester, Vinylchlorid, Vinylalkylether mit 1 bis 4 Kohlenstoffatomen in der Alkylgruppe, Monoester als Glykolen mit 2 bis 4 Kohlenstoffatomen und (Meth)Acrylsäure, Vinylester von Carbonsäuren mit 1 bis 18 Kohlenstoffatomen, wie Vinylacetat oder Vinylstearat.

Mit besonderem Vorteil werden als Monomere Butadien-1,3, Styrol, Acrylnitril, n-Butylacrylat, Methacrylsäure, Acrylsäure, Malein-, Fumarsäure und Itaconsäure eingesetzt. Als Latexgrundlage bevorzugte Copolymerisate setzen sich aus 45 bis 80 Gew.-Teilen Styrol und gegebenenfalls Acrylnitril sowie 20 bis 55 Gew.-Teilen Butadien oder n-Butylacrylat und 0 bis 5 Gew.-Teilen ungesättigte Säure C. zusammen.

In einer bevorzugten Ausführungsform der Erfindung enthält der verwendete Latex mindestens zwei Polymerisate mit verschiedenen Glasübergangstemperaturen, von denen mindestens jeweils ein Polymerisat die Härte und ein anderes die Filmbildung bestimmt, zu welchem Zweck vorteilhaft eine Mischung aus mindestens einem Latex mit einem Polymerisat hoher Glasübergangstemperatur (nachfolgend: "Hartlatex") und einem Latex aus mindestens einem Polymerisat mit guten Filmbildungseigenschaften (nachfolgend: "Weichlatex") zum Einsatz kommt. Bevorzugte Hartlatex-Polymerisate enthalten zweckmäßig
92 bis 100, vorzugsweise 95 bis 99,5, Gew.-% polymerisierte Einheiten von Komponente A. und
0 bis 8, vorzugsweise 0,5 bis 5, Gew.-% copolymerisierte Einheiten von Komponente C.,
jeweils bezogen auf Hartlatex-Polymerisat.
Bevorzugte Weichlatex-Polymerisate enthalten
20 bis 75, vorzugsweise 30 bis 54,5, Gew.-% copolymerisierte Einheiten von Komponente A.,
25 bis 80, vorzugsweise 45 bis 69,5 Gew.-% copolymerisierte Einheiten von Komponente B.,
0 bis 8, vorzugsweise 0,5 bis 5, Gew.-% copolymerisierte Einheiten von Komponente C. und
0 bis 10 Gew.-% copolymerisierte Einheiten von Komponente D.,
jeweils bezogen auf Weichlatex-Polymerisat.

Gemäß einer bevorzugten Ausführungsform wird als Weichlatex ein Polychloropren-Latex eingesetzt. Das diesem Latex zugrundeliegende Polychloropren ist ein Polymerisat von 2-Chlorbutadien, das bis zu 10 Gew.-%, bezogen auf Polychloropren, copolymerisierte Einheiten von ethylenisch ungesättigten Comonomeren mit 3 bis 12 C-Atomen und 1 oder 2 copolymerisierbaren C=C-Doppelbindungen pro Molekül enthalten kann. Beispiele für geeignete Comonomere umfassen 2,3-Dichlorbutadien, 1-Chlorbutadien, Styrol, Butadien, Isopren, Acrylnitril, Methacrylnitril und die oben unter Gruppe C. genannten Monomeren. Das einzusetzende Polychloropren kann auch Schwefel-modifiziert sein; in diesem Falle werden dann 0,05 bis 1,5, vorzugsweise 0,1 bis 1, Gew.-%, bezogen auf eingesetztes polymerisierbares Monomer, elementarer Schwefel oder die äquivalente Menge Schwefelspender bei der Chloropren-Polymerisation mitverwendet.

Das Gewichtsverhältnis Weichlatex zu Hartlatex kann zwischen 45/55 und 80/20 liegen.

Zum Einsatz kommen zur Herstellung der Hartlatices bevorzugt Polymerisate mit Glasübergangstemperaturen Tg von über 90°C, insbesondere von über 100°C und zur Herstellung der Weichlatices Polymerisate mit Glasübergangstemperaturen von unter 30°C.

Die mittleren Teilchendurchmesser d50 der Latex-Polymerisate betragen vorzugsweise 50 bis 300 nm, insbesondere 80 bis 250 nm, wobei vorteilhaft die mittleren Teilchendurchmesser d50 der Weichlatex-Polymerisate 80 bis 200 nm und die der Hartlatex-Polymerisate 150 bis 250 nm betragen. Unter dem "mittleren Teilchendurchmesser d50" ist hierbei der Durchmesser zu verstehen, oberhalb und unterhalb dessen jeweils 50 Gew.-% der Teilchen liegen. Er kann mittels Ultrazentrifugen-Messungen (W. Scholtan, H. Lange, Kolloid Z. und Z. Polymere 250 (1972), 782-796) oder mittels Elektronenmikroskopie und anschließende Teilchenauszählung (G. Kämpf, H. Schuster, Angew. Makromolekulare Chemie 14 (1970), 111-129) bestimmt werden.

Die eingesetzten Weichlatices können das zugrundeliegende Polymerisat auch in agglomerierter Form enthalten. Dies ist insbesondere dann der Fall, wenn hohe Feststoffgehalte gewünscht werden, die anders nicht erzielbar sind. So lassen sich ohne weiteres Feststoffgehalte von z.B. 55 bis 70 Gew.-%, bezogen auf Weichlatex, einstellen.

Die Polymerisate der Weichlatices gewährleisten eine zufriedenstellende Filmbildung insbesondere dann, wenn Filme einer Dicke von 1 mm eine Bruchdehnung von mindestens 200, besser von mindestens 350 % aufweisen. Die für diese Latices besonders geeigneten Polymerisate können unvernetzt sein. Es werden hierfür jedoch vorteilhaft vernetzte Polymerisate eingesetzt, die in der Regel einen Gelgehalt von mindestens 40 Gew.-% (gemessen in Toluol) besitzen.

Die Herstellung der Polymerisate erfolgt mit den üblichen bekannten Herstellungsverfahren, wobei zur Vermeidung einer vorzeitigen Gelierung die Polymerisation zweckmäßig in Anwesenheit von Kettenübertragungsmitteln (Reglern) beispielsweise Alkylmercaptanen mit einer Kettenlänge von 4 bis 20 Kohlenstoffatomen, wie z.B. tert. Dodecylmercaptan, ferner Alkylmercaptan mit weiteren funktionellen Gruppen, wie 2-Mercaptoethanol oder Thioglykolsäure, und/oder organischen Halogenverbindungen, wie Tetrabromkohlenstoff oder Brommethylbenzol erfolgt. Die eingesetzte Menge richtet sich u.a. nach der Wirksamkeit des Reglers und liegt in der Regel im Bereich von 0,5 bis 2,0 Gew.-Teilen pro 100 Gew.-Teilen Monomer.

Die Herstellung der wäßrigen Kautschuk-Latices kann in an sich bekannter Weise durch Emulsionspolymerisation unter Verwendung von Emulgatoren erfolgen. Hierzu werden in einer Menge von 0,1 bis 7 Gew.-% (bezogen auf Monomere) anionogene, kationogene oder nicht-ionogene Dispergiermittel oder Kombinationen hiervon verwendet. Sie weisen im allgemeinen einen Feststoffgehalt von 40 bis 70, vorzugsweise von 45 bis 60 Gew.-% auf. Als Initiatoren eignen sich anorganische Peroxo-Verbindungen, wie Wasserstoffperoxid, Natrium-, Kalium- oder Ammoniumperoxodisulfat, Peroxocarbonate und Boratperoxihydrate, ferner organische Peroxoverbindungen, wie Acrylhydroperoxide, Diacylperoxide, Alkylhydroperoxide, Dialkylperoxide und Ester, wie tert.-Butylperbenzoat. Die Initiatormenge liegt im allgemeinen in den Grenzen von 0,01 bis 2 Gew.-%, bezogen auf die Gesamtmenge der eingesetzen Monomeren.

Die Verschäumung kann unter Verwendung üblicher Aggregate mechanisch erfolgen, wobei vorteilhaft die Viskosität des Latex vor der Verschäumung durch Zusatz von Verdickungsmittel auf 8000 bis 12 000 mPa.s (Brookfield-Viskosimeter RV, Spindel 5, 20 U/Min, 23°C) erhöht und gegebenenfalls Schaumstabilisatoren zugesetzt werden. Bei Arbeiten mit füllstofffreiem Latex werden zweckmäßig Schäume mit einem Litergewicht von 380 bis 420 g/l eingesetzt.

Selbstverständlich können zur Erreichung bestimmter Eigenschaften, beispielsweise einer verbesserten Schalldämmung, den Latices auch Füllstoffe, wie z.B. Kreide oder Bariumsulfat, vorzugsweise in Mengen von 20 bis 100 Gew.-%, bezogen auf Latex-Feststoff, zugesetzt werden.

Die Schaumstoffhöhe (naß) auf dem Teppich beträgt meistens 1 bis 10 mm, vorzugsweise 2 bis 5 mm, wobei die Trocknung zweckmäßig bei Temperaturen von 130 bis 180°C, vorzugsweise bei 140 bis 160°C erfolgt.

Auf den so hergestellten Schaumstoffrücken kann nun eine gasundurchlässige Schicht, z.B. in Form einer Folie, aufgebracht werden. Es kann jedoch auch eine weitere (ungeschäumte) Latexschicht aufgebracht werden, wobei der hierfür eingesetzte Latex im wesentlichen der Zusammensetzung des Schaumlatex entspricht. Zum Einsatz für diesen Zweck eignen sich insbesondere Latices aus 15 bis 30 Teilen Hartlatex und 85 bis 70 Teilen Weichlatex, wobei die gewünschte Viskosität durch die Zugabe eines Verdikkungsmittels eingestellt wird. Da die gasundurchlässige Schicht keine Blasen enthalten soll, ist die Mitverwendung von Entschäumer von Vorteil. Eine Viskosität von 5000 bis 12 000 mPa.s (Brookfield-Viskosimeter RV, Spindel 5, 20 U/Min, 23°C) hat sich für die meisten Fälle als geeignet erwiesen. Die Schicht wird zweckmäßig in einer Schichtdicke (trocken) von 80 bis 120, vorzugsweise etwa 100 µm aufgetragen werden. Die Trocknung kann auf die gleiche Weise wie die des Latexschaums erfolgen.

Der in dieser Weise hergestellte Teppich wird danach in geeigneter Weise, etwa mittels gekühlter Walzen, unter Druck von 2 bis 20, vorzugsweise 5 bis 10 bar verpreßt und z.B. in einem IR-Feld, auf eine seine Verformung zulassende Temperatur von etwa 170 bis 180°C aufgeheizt, worauf die Verformung, etwa durch Tiefziehen, erfolgt.

Weitere Ausführungsformen und Vorteile ergeben sich aus der nachstehenden Beschreibung, in der die Erfindung anhand der beiliegenden Zeichnung beispielsweise erläutert ist. Es zeigen
- Fig. 1: die schematische Schnittdarstellung einer vorformbaren Flächenverkleidung gemäß Erfindung
- Fig. 2: eine andere Ausführungsform einer vorformbaren Flächenverkleidung
Das in der Zeichnung schematisch wiedergegebene vorgeformte textile Flächengebilde zur Verkleidung lärmbelasteter Räume, insbesondere des Fahrgastraumes von Kraftfahrzeugen besteht aus einer Trägerschicht 1 aus Filz, in die die Tuftingnoppen 2 eingenadelt sind und auf deren Rückseite eine Schicht 3 geschäumter Latex, weiterhin eine dichte Sperrschicht 4 sowie weiterhin eine schalldämmende geschäumte Rückenbeschichtung 5 aufgebracht sind. Die Sperrschicht 4 kann von einer Folie oder einem Aufstrich aus ungeschäumtem Latex gebildet sein. Es ist weiterhin die Wahl der eingesetzten Materialien so getroffen, daß die Lagen ohne Bildung von Reflexionsflächen eine sich von der Trägerschicht 1 bis zur Rückenbeschichtung 5 kontinuierlich verringernde Schalldurchlässigkeit besitzen. Hierbei kann anstelle der auf Filz getufteten Sichtfläche 1, 2 mit demselben Ergebnis auch ein Nadelfilz als Sichtfläche vorgesehen sein.

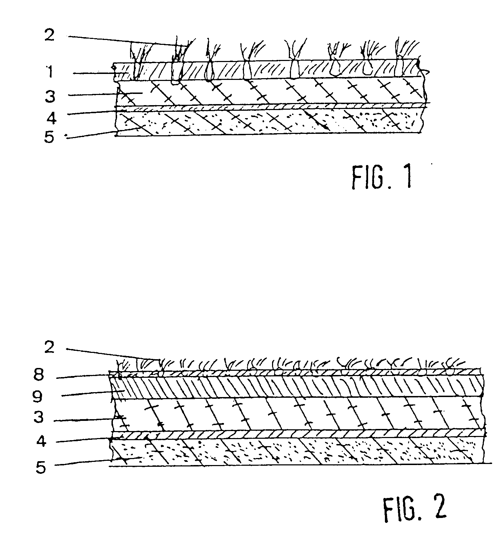

Bei der in Fig. 2 wiedergegebenen Ausführungsform einer vorgeformten Flächenverkleidung besteht die Trägerschicht für die Tuftingfläche 2 aus einer dünnen Lage eines leicht verfestigten Filzes 8, auf die eine stärkere Lage eines unverfestigten Filzes 9 mittels eines gleichzeitig der Einbindung der Nadelung in den leicht verfestigten Filz 8 dienenden, beispielsweise ebenfalls aus einem Latex bestehenden Bindemittels aufkaschiert ist. Zusätzlich kann die unverfestigte Filzlage 9 auf der gegen die leicht verfestigte Filzlage 8 weisenden Seite mit einer Haftbeschichtung, beispielsweise mit einem Aufstrich oder einem Punktraster aus einem Schmelzkleber versehen sein, wodurch unter der Wirkung der bei der Verformung aufgebrachten Wärme eine weitere Verbesserung der Bindung zwischen den Lagen erzielt wird. Die Aufbringung des unverfestigten Filzes kann hierbei in einem Arbeitsgang mit der Aufbringung des die Einbindung der Nadelung in den leicht verfestigten Filz bewirkenden Latex erfolgen. Es sind im übrigen in Fig. 2 die entsprechenden Teile mit denselben Bezugsziffern bezeichnet wie in Fig. 1.

In den nachstehend wiedergegebenen Beispielen sind alle Anteils- und Prozentangaben als Gew. -Anteile bezw. Gew.-% zu verstehen. Die Beispiele geben nur Teilschritte wieder.

### Beispiel 1

### I. Herstellung der Ausgangslatices

### A. Weichlatex

Unter Stickstoffatmosphäre werden 46 Teile Wasser, 0,2 Teile Natriumlaurylsulfat und 0,1 Teil Ammoniumpersulfat auf 80°C erhitzt und gleichmäßig innerhalb von 8 Stunden folgende Zuläufe dosiert:
a) Monomerzulauf bestehend aus 60 Teilen Styrol, 38 Teilen Butadien, 2 Teilen Acrylsäure und 1 Teil tert.-Dodecylmercaptan;
b) wäßriger Zulauf bestend aus 44 Teilen Wasser, 2,0 Teilen Natriumlaurylsulfat, 0,3 Teilen Ammoniumpersulfat und 0,5 Teilen Natriumhydroxid.
Nach Ende der Zuläufe werden noch weitere 4 Stunden bei 80°C nachgerührt und die Polymerisation durch Zusatz von 0,8 Teilen einer 25 %igen wäßrigen Diethylhydroxylaminlösung abgestoppt. Der Umsatz beträgt 99 %. Die Restmonomeren werden im Vakuum bei 60°C (5 Stunden) entfernt.

Der pH-Wert wird mit 5 %iger wäßriger Natronlauge auf 8 eingestellt. Der Feststoffgehalt beträgt 50 %, die Viskosität 200 mPas und der Teilchendurchmesser d50 125 nm.

### B. Hartlatex

Unter Stickstoffatmosphäre werden 50 Teile Wasser und 0,05 Teile Natrium-C12-C15-alkylsulfonat auf 80°C erhitzt. Man gibt 10 Teile Styrol und eine Lösung von 0,1 Teil Ammoniumpersulfat in 3 Teilen Wasser zu und läßt 30 Minuten bei 80°C polymerisieren. Innerhalb von 3 Stunden läßt man dann gleichzeitig 90 Teile Styrol und eine Mischung aus 48 Teilen Wasser, 2 Teilen Natrium-C₁₂-C₁₅-alkylsulfonat, 2,2 Teilen ethoxyliertem Nonylphenol (durchschnittlich 20 Ethylenoxideinheiten pro Molekül) und 0,025 Teile Ammoniumpersulfat zulaufen.

Es wird unter 3-stündigem Rühren bei 80°C mit 5 %iger Natronlauge der pH-Wert auf 8 eingestellt. Die Viskosität beträgt 150 mPa.s, der Feststoffgehalt 50 % und der Teilchendurchmesser d50 155 nm.

### II. Herstellung des Latexschaums

Es werden
70 Teile Hartlatex-Dispersion,
130 Teile Weichlatex-Dispersion,
9 Teile Natriumsulfosuccinamat (30 %ig in Wasser)
2 Teile Dinatrium-N-octadecyl-sulfosuccinat (25 %ig in Wasser) und
11 Teile Acrylatverdicker (Acrylon^{R} A 300 konz., der Firma Protex/Frankreich, 12 %ig in Wasser)
gemischt (pH-Wert 8,6; Viskosität der Mischung: 10 000 mPa.s) und durch Aufschäumen durch Rühren mit einem Schaummischer auf ein Schaumlitergewicht von 400 g/l eingestellt.

### III. Teppichrücken

### A) ungefüllt

Der Latexschaum wird in einer Menge von 500 bis 600 g Feststoff/m² Tuftingteppich ähnlich einem Gel- oder Nongel-Teppichschaum mittels eines freistehenden bzw. eines Walzen-Rakels auf die Rückseite des Teppichgebildes aufgetragen und mit Heißluft bei 150°C bis zur völligen Trocknung behandelt. Anschließend wird ein sogenannter Schlußstrich aus einer unverschäumten Mischung aus 20 % Hartlatex und 80 % Weichlatex mit Acrylatverdicker auf eine Viskosität von 10 000 mPa.s verdickt, in einer Schichtdecke von 80 µm aufgebracht und ebenfalls bei 150°C getrocknet.

Am Auslauf aus dem Trockenofen wird der Teppich mit einer gekühlten Walze mit einem Druck von 5 bar verpreßt.

### B) gefüllt

Man arbeitet wie unter A) beschrieben mit dem Unterschied, daß man der Latexmischung vor dem Verschäumen 40 bis 65 % Bariumsulfat (bezogen auf Feststoff des Latex) zusetzt und auf ein Litergewicht von 500 g/l aufschäumt. Der Schaum wird in einer Schichtdicke appliziert, die einer Feststoffmenge von 1200 g/m² entspricht.

### Beispiel 2

### I. Ausgangslatices

### A. Weichlatex

Polychloropren-Latex, nicht Schwefel-modifiziert, hergestellt ohne Verwendung von Comonomeren, Feststoffgehalt 58 %, Teilchendurchmesser d50 190 nm.

### B. Hartlatex

wie in Beispiel 1

### II. Herstellung des Latexschaums

Es werden
70 Teile Hartlatex-Dispersion,
112 Teile Weichlatex-Dispersion,
9 Teile Natriumsulfosuccinamat (30 %ig in Wasser),
12 Teile ZnO-Dispersion (60 %ig),
2 Teile Dinatrium-N-octadecyl-sulfosuccinat (25 %ig in Wasser),
2 Teile Vulkanox^{R} BkF 50 %ig und
5 Teile Acrylatverdicker Acrylon^{R} A 300 konz., der Firma Protex/Frankreich, 12 %ig in Wasser)
gemischt (pH-Wert 11,0; Viskosität der Mischung: 8 000 mPa.s) und durch Aufschäumen durch Rühren mit einem Schaummischer auf ein Schaumlitergewicht von 450 g/l eingestellt.

### III.Teppichrücken

### A) ungefüllt

Der Latexschaum wird in einer Menge von 500 bis 600 Feststoff/m2 Tuftingteppich ähnlich einem Gel- oder Nongel-Teppichschaum mittels eines freistehenden bzw. eines Walzen-Rakels auf die Rückseite des Teppichgebildes aufgetragen und mit Heißluft bei 150°C bis zur völligen Trocknung behandelt.

Am Auslauf aus dem Trockenofen wird der Teppich mit einer gekühlten Walze mit einem Druck von 5 bar verpreßt.

### B) gefüllt

Man arbeitet wie unter A) beschrieben mit dem Unterschied, daß man der Latexmischung vor dem Verschäumen 40 bis 65 % Bariumsulfat (bezogen auf Feststoff des Latex) zusetzt und auf ein Litergewicht von 500 g/l aufschäumt. Der Schaum wird in einer Schichtdicke appliziert, die einer Feststoffmenge von 1.200 g/m2 entspricht.

## Patentansprüche

1. Verformbares textiles Flächengebilde zur Verkleidung lärmbelasteter Räume, insbesondere des Fahrgastraums von Kraftfahrzeugen, bestehend aus einer auf ein Flächengewebe genadelten oder getufteten Sichtfläche, jeweils mindestens einer thermoplastisch verformbaren oder schaumdichten Schicht als Sperrschicht sowie einer schalldämmenden geschäumten Rückenbeschichtung, dadurch gekennzeichnet, daß die Sichtfläche aus Flächengewebe, Nadelfilz oder einer in Filz als Trägerschicht (1) genadelten Tuftingfläche (2) gebildet ist, auf deren Rückseite eine Schicht (3) aus geschäumtem Latex, die Sperrschicht (4) sowie die schalldämmende geschäumte Rückenbeschichtung (5) aufgebracht sind, wobei die Sperrschicht (4) zwischen geschäumter Latex-Schicht (3) und Rückenbeschichtung (5) angeordnet ist.

2. Verformbares textiles Flächengebilde nach Anspruch 1, dadurch gekennzeichnet, daß als Trägerschicht für die Tuftingfläche (2) eine dünne Lage eines leicht verfestigten Filzes (8) vorgesehen ist, auf die eine stärkere Lage eines unverfestigten Filzes (9) mittels eines gleichzeitig der Einbindung der Nadelung in den leicht verfestigten Filz (8) dienenden Bindemittels aufkaschiert ist.

3. Verformbares textiles Flächengebilde nach Anspruch 1 oder 2, dadurch gekennzeichnet, daß die Lagen eine sich von der Trägerschicht (1) bis zur Rückenbeschichtung (5) kontinuierlich verringernde Schalldurchlässigkeit besitzen.

4. Verformbares textiles Flächengebilde nach Anspruch 2, dadurch gekennzeichnet, daß das Bindemittel von einem weichen Thermoplasten gebildet ist.

5. Verformbares textiles Flächengebilde nach Anspruch 2 oder 3, dadurch gekennzeichnet, daß die unverfestigte Filzlage (9) auf der gegen die leicht verfestigte Filzlage (8) weisenden Seite mit einer Haftbeschichtung, beispielsweise mit einem Aufstrich oder einem Punktraster aus einem Schmelzkleber versehen ist.

6. Verformbares textiles Flächengebilde nach einem der Ansprüche 1 bis 5, dadurch gekennzeichnet, daß die Sperrschicht (4) von einer Folie oder einem Aufstrich aus ungeschäumtem Latex gebildet ist.

7. Verformbares textiles Flächengebilde nach einem der Ansprüche 1 bis 6, dadurch gekennzeichnet, daß der geschäumte Latex mit anorganischen Füllstoffen, beispielsweise Schwerspat oder Kreide gefüllt ist.

## Claims

1. Deformable sheet-form textile for lining noise-polluted spaces, in particular the passenger compartment of motor vehicles, comprising a visible surface needled or tufted on a sheet-form fabric, at least each, a thermoformable or foam-dense layer as a barrier layer as well as a sound absorbing foamed backcoating, characterized in that the visible surface is made of sheet-formed fabric, needlefelt or a tufted surface (2) needled into felt as backing layer (1), to the back of which a layer (3) of foamed latex, the barrier layer (4) as well as the sound absorbing foamed backcoating (5) are applied, the barrier layer (4) being arranged between the layer of foamed latex (3) and the backcoating (5).

2. Deformable sheet-form textile according to claim 1, characterized in that, as a backing layer for the tufted surface (2), a thin layer of a slightly compacted felt (8) is provided, onto which a thicker layer of a non-compacted felt (9) is line-coated by means of a binder concurrently serving for the tieing-up of the needling into the slightly compacted felt (8).

3. Deformable sheet-form textile according to claims 1 or 2, characterized in that the layers have a sound permeability decreasing continuously from the backing layer (1) to the backcoating (5).

4. Deformable sheet-form textile according to claim 2, characterized in that the binder is made of a soft thermoplast.

5. Deformable sheet-form textile according to claims 2 or 3, characterized in that, at the side pointing to the slightly compacted felt layer (8), the non-compacted felt layer (9) is provided with an adhesive coating such as a layer or a dot screen of a hot melt adhesive.

6. Deformable sheet-form textile according to one of claims 1 through 5, characterized in that the barrier layer (4) is made of a foil or a layer of unfoamed latex.

7. Deformable sheet-form textile according to one of claims 1 through 6, characterized in that the foamed latex is filled with inorganic filler such as heavy spare or chalk.

## Revendications

1. Matière textile déformable pour revêtir des espaces exposés au bruit, en particulier le compartiment à voyageurs de véhicules automobiles, ledit matière textile se composant d'une superficie visible épinglée ou pourvue de tufting sur une tissu platiforme, de chacune, au moins d'une couche de déformibilité themoplastique ou d'étanchéité mousse comme couche de barrage aussi que d'une enduction d'envers moussée et amortissant le bruit, ledit matière textile déformable étant caractérisé par le fait que la superficie visible est formée de tissu platiforme, de feutre aiguilleté ou de superficie de tufting (2) épinglée dans le feutre comme soutien couche (1), en quoi sur ladite superficie sont appliquées une couche en latex (3) moussée, la couche de barrage (4) aussi que l'enduction d'envers (5) amortissant le bruit et moussée, la couche de barrage étant disposée entre la couche en latex (3) moussée et l'enducation d'envers (5).

2. Matière textile déformable suivant la revendication 1, caractérisé en ce que, en tant que soutien couche pour la superficie de tufting (2), on a pourvu une couche moussée d'un feutre légèrement durci (8), sur lequel on a contreplaqué une couche plus forte d'un feutre non-durci (9) par moyen un adhésif effectuant en même temps la liaison de l'aiguilletage dans le feutre légèrement durci (8).

3. Matière textile déformable suivant la revendication 1 ou 2, caractérisé en ce que les couches montrent une transmission du son s'amortissant du soutien couche (1) jusqu'à l'enducation d'envers (5) d'une façon continue.

4. Matière textile déformable suivant la revendication 2, caractérisé en ce que l'adhésif est formé d'un thermoplastique moux.

5. Matière textile déformable suivant la revendication 2 ou 3, caractérisé en ce que, à sa face montrant vers le feutre couche légèrement durci (8), on a pourvu le feutre couche non-durci (9) d'un revêtement adhésif ou d'une trame à points en colle à fusion.

6. Matière textile déformable suivant une des revendications 1 à 5, caractérisé en ce que la couche de barrage (4) est formée d'une feuille ou d'un enduit en latex non-moussé.

7. Matière textile déformable suivant une des revendications 1 à 6, caractérisé en ce que le latex moussé est rempli avec de matière de charge, par exemple avec du baryte ou avec de la craie.
